# EUROPÄISCHE PATENTSCHRIFT

(11) **EP 3 669 194 B1**
(45) Veröffentlichungstag und Bekanntmachung des Hinweises auf die Patenterteilung: **01.02.2023**
(21) Anmeldenummer: 18749734.2
(22) Anmeldetag: 19.07.2018
(51) Int. Cl.: G01P 3/488, G01D 5/14, G01P 13/04

(54) **DREHZAHLSENSORANORDNUNG**
ROTATIONAL SPEED SENSOR ARRANGEMENT
ENSEMBLE À CAPTEUR DE VITESSE DE ROTATION

(30) Priorität: 14.08.2017 DE 102017214166
(43) Veröffentlichungstag der Anmeldung: 24.06.2020
(73) Patentinhaber: Volkswagen Aktiengesellschaft, 38440 Wolfsburg (DE)
(72) Erfinder: FRICKE, Jens, 38112 Braunschweig (DE); HERRMANN, Julian, 38518 Gifhorn (DE); BÖSEKE, Michael, 38524 Sassenburg (DE); MATTEG, Ines, 38165 Lehre (DE)
(86) Internationale Anmeldenummer: PCT/EP2018/069606
(87) Internationale Veröffentlichungsnummer: WO 2019/034362

(56) Entgegenhaltungen:
- DE-A1- 3 523 250
- DE-A1- 4 018 834
- DE-A1- 19 533 964
- DE-A1- 19 614 165
- DE-T2- 69 229 131
- US-A- 5 489 844
- US-A- 5 814 985

## Beschreibung

Die Erfindung betrifft eine Drehzahlsensoranordnung, bei der ein Geberrad auf einen Differential-Hall-Sensor wirkt und eine Signalschaltung basierend auf einem Hall-Signal ein Ausgangssignal ermittelt, welches eine Drehstellung und/oder eine Drehbewegung des Geberrades anzeigt.

Es gibt unterschiedliche Drehzahlsensoren, die eingesetzt werden, um Motordrehzahlen zu erfassen, sie werden auch Drehzahlgeber genannt und sind für ein modernes Motor-Management erforderlich. Sie dienen dazu, die Motordrehzahl zu bestimmen, die Winkellage der Kurbelwelle zu erfassen (Stellung der Kolben) und dazu eine Arbeitsspielposition bei Viertaktmotoren (0 - 720° Kurbelwellenwinkel) durch eine Lageerkennung der Nockenwelle in Bezug zur Kurbelwelle zu erfassen.

Das Grundprinzip besteht darin, über sogenannte Impulsräder (Geberräder) magnetische Feldänderungen zu erzeugen. Da mit steigender Drehzahl auch die Frequenz der erfassten Impulse ansteigt, kann die Drehzahl im Steuergerät über den Zeitabstand zweier oder mehrerer Impulse berechnet werden. Man unterscheidet zwischen passiven und aktiven Drehzahlsensoren.

Passive Drehzahlsensoren sind beispielsweise induktive Drehzahlsensoren, bei denen die Drehung eines Impulsrades in einer Spule eine zur Änderungsgeschwindigkeit und damit zur Motordrehzahl proportionale periodische Ausgangsspannung induziert. Die Amplitude dieser Spannung steigt mit steigender Drehzahl stark an. Zur Auswertung im Steuergerät formt dieses die sinusähnliche Signalspannung mit stark schwankenden Amplituden in eine Rechteckspannung mit konstanter Amplitude um. Dieser Rechteckspannungsverlauf (Ausgangssignal) wird zur Bestimmung der Drehzahl und einer Drehstellung (z.B. Wellenwinkel einer Nockenwelle, einer Kurbelwelle oder von Zwischenwellen) genutzt. Solche passiven Sensoren sind relativ toleranzsensibel (Ausrichtung und Anordnung des Sensors zum Impuls- oder Sensorrad) und es ist eine bestimmte Mindestdrehzahl erforderlich, damit diese Sensoren überhaupt ansprechen. Für die Positionsbestimmung eines stillstehenden Geberrades sind solche Sensoren ungeeignet.

Daher werden zunehmend aktive Drehzahlsensoren eingesetzt, die nach dem magnetostatischen Prinzip arbeiten und eine Drehzahlerfassung auch bei sehr niedrigen Drehzahlen ermöglichen. Bei solchen Sensoren kommen z.B. einfache Hall-Sensoren zum Einsatz, die jedoch wegen der Signalschwankungen (z.B. temperaturbedingt, Größe des Luftspaltes zwischen Sensor und Geberrad) nur bedingt geeignet sind. Das gilt auch bei magnetisch aktiven Rotoren (Multipolrädern), bei dem die unterschiedlichen Magnetpole über den Umfang des Geberrades verteilt sind und eine Hall-Spannung induzieren. Der Aufbau der Hallsensoren - die ohne Magnet verbaut werden können - ist vereinfacht. Allerdings sind wesentlich teurere Geberräder mit einer magnetisierbaren Beschichtung erforderlich.

Um die Signalqualität zu verbessern, wurden sogenannte Gradientensensoren entwickelt, die sich auf der Basis von Differential-Hall- oder Differential-Feldplatten-Sensoren realisieren lassen und für die Abtastung magnetisch passiver Rotoren (Geberräder) besser eignen als einfache Hall-Sensoren. Solche Differential-Hall-Sensoren liefern deutliche Signale bei üblichen Luftspalten, aber auch bei höheren Temperaturen, wie sie insbesondere im Verbrennungsmotorenbereich vorkommen können. Das aufgenommene Rohsignal wird durch eine Auswerteschaltung im Sensor aufbereitet und die Amplitude des Ausgangssignals ist von der Drehzahl unabhängig.

Es werden üblicherweise Multipol oder ferromagnetische Stahlgeberräder mit vergleichsweise geringer Auflösung eingesetzt (in der Regel ein-, zwei-, drei- oder vierzahniges Zahnprofil). Damit lässt sich zwar eine Drehzahlsensoranordnung in dem vergleichsweise begrenzten Bauraum realisieren, der an der Nockenwelle zur Verfügung steht (kleiner Durchmesser des Geberrades). Es steht aber nur eine relativ geringe Auflösung am Geberrad zur Verfügung. Dadurch ist jedoch auch die Auflösung der Drehstellung und des Geschwindigkeitsverlaufs jedoch vergleichsweise gering. Durch die üblicherweise verwendete Zahnform mit im Wesentlichen rechteckigen oder trapezförmigen Profilen lässt sich die Auflösung der Geberräder bei kleinen Durchmessern nicht erhöhen. Eine erhöhte Zähnezahl, welche die Auflösung erhöhen würde, erfordert größere Geberräder, die aber oft aus Platzgründen nicht erwünscht oder auch nicht realisierbar sind.

Insbesondere bei modernen Brennverfahren werden an der Einlassseite des Motors schnelle Nockenwellenverstelleinheiten benötigt, für deren korrekte Regelung ihrer Verstellposition am Motorsteuergerät mehrmals pro Nockenwellenumdrehung eine Lagerückmeldung erforderlich ist. Der sehr begrenzte zur Verfügung stehende Bauraum im Nockenwellenbereich erschwert jedoch den Einsatz der erforderlichen hochauflösenden Geberräder, die einen Durchmesser von mehr als 80 mm erfordern.

Bekannte Sensoranordnungen sind aus der DE 10 2007 029 819 A1 sowie aus der DE 10 2006 061 575 A1 bekannt, bei denen zur inkrementellen Ermittlung eines Drehwinkels und einer Drehrichtung spezielle Hall-Sensoranordnungen angegeben werden. Mit Hilfe dieser Anordnungen wird jedoch das Bauraumproblem nicht gelöst.

Die Offenlegungsschrift DE 195 33 964 A1 beschreibt eine Magnetismuserfassungsvorrichtung, die zur Unterdrückung von Schwankungen von Impuls-Intervallen in der Lage ist. Ein Geberrad kann dabei Zähne in Form eines gleichschenkligen Dreiecks aufweisen, zwischen denen Lücken definierter Breite angeordnet sind.

Die Offenlegungsschrift US 5,814,985 A beschreibt einen inkrementellen Positions- und/oder Geschwindigkeits-Hall-Sensor gekennzeichnet dadurch, dass der Hall-Sensor nahe eines Null-Feld-Punktes lokalisiert ist.

Die Offenlegungsschrift DE 692 29 131 T2 beschreibt ein Sensorsystem und ein Verfahren, das die Drehzahl und die Position einer Kurbelwelle oder einer Nockenwelle eines Verbrennungsmotors bestimmen kann. Eine Referenzposition wird dabei durch einen zusätzlichen Zahn angezeigt, der in einer Lücke zwischen zwei regulären Zähnen angeordnet ist.

Die Offenlegungsschrift DE 35 23 250 A1 beschreibt einen Sensor zum Erfassen des Durchgangs einer Gruppe von Kolben in einem Verbrennungsmotor durch den oberen Totpunkt.

Die Offenlegungsschrift DE 40 18 834 A1 beschreibt eine Vorrichtung zur Unterscheidung zwischen gegensinnigen Bewegungsrichtungen eines Teils.

Aus der Offenlegungsschrift DE 196 14 165 A1 ist ein Magnetdetektor zum Erfassen von Bezugsstellungen und Drehrichtungen bekannt.

Aus der Offenlegungsschrift US 5,489,844 A ist eine Anordnung von drei Magnetsensoren bekannt, die einen ersten und zweiten Differential-Hall-Sensor bilden, wodurch man die Position, die Geschwindigkeit und die Richtung eines Motors in einer Umgebung mit hohem Magnetfeldrauschen bestimmen kann.

Es besteht also die Aufgabe, eine Drehzahlsensoranordnung, insbesondere eine Hall-Sensoranordnung, bereitzustellen, bei der eine hohe Auflösung mit geringem

Geberraddurchmesser im Kfz-Verbrennungsmotorbereich realisierbar ist. Diese Aufgabe wird durch die erfindungsgemäße Sensoranordnung nach Anspruch 1, die Antriebswellenanordnung nach Anspruch 8, den Verbrennungsmotor nach Anspruch 9 und das Kraftfahrzeug nach Anspruch 10 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die erfindungsgemäße Drehzahlsensoranordnung umfasst ein Geberrad, das zueinander beabstandete Signalmarken aufweist; einen Sensor mit wenigstens drei, einen ersten und zweiten Differential-Hall-Sensor bildenden Hall-Sensorelementen, die jeweils in Abhängigkeit der Position und/oder der Bewegung der Signalmarken des Geberrads ein Hall-Signal ausgeben; und eine Signalschaltung, die basierend auf dem Hall-Signal ein Ausgangssignal ermittelt und basierend auf dem Ausgangssignal eine Drehstellung und -geschwindigkeit des Geberrades bestimmt.

Die Erfindung zeichnet sich dadurch aus, dass die Signalmarken radial verlaufende Zahnelemente mit zwei Zahn- oder Schaltflanken aufweisen und diese Schaltflanken in einer (gemeinsamen) Schaltkante zusammenlaufen. Bei bekannten Geberrädern sind die radialen Zahnelemente in der Regel als mehr oder weniger rechteckige bzw. trapezförmige Schaltelemente ausgebildet, die daher in Umfangsrichtung eine vergleichsweise große Ausdehnung haben. Zwischen den Schaltflanken ist bei diesen Geberrädern ein sich in Umfangsrichtung erstreckender Scheitelabschnitt ausgebildet, der die beiden Schaltflanken miteinander verbindet. Damit ist die Anzahl der über den Umfang eines Geberrades verteilbaren Signalmarken begrenzt und die Signalauflösung ebenfalls.

Erfindungsgemäß sind dagegen die Schaltflanken so ausgebildet, dass sie sich in einer gemeinsamen Schaltkante treffen. Damit kann der Zahnkörper insgesamt wesentlich schmaler ausgebildet werden (geringere Ausdehnung in Umfangsrichtung), so dass die Anzahl der als Signalmarken dienenden Zahnelemente über den Umfang des Geberrades erhöht werden kann. Weiter ist es bei dieser Ausführung auch möglich, die für ein diskretes Schaltsignal erforderlichen Lücken zwischen den Zahnelementen schmaler auszubilden. Damit ist es möglich, ein Geberrad mit hoher Auflösung und geringem Durchmesser zu realisieren.

Dabei umfassen die Signalmarken auch Lücken , die in Umfangsrichtung gleiche Abstände zwischen den Zahnelementen bilden. Durch die feste Dimensionierung der Lücken zwischen den Zahnelementen kann eine genaue Drehgeschwindigkeit des Geberrades mit Hilfe des Differential-Hall-Sensors erfasst werden.

Erfindungsgemäß ist eine Referenzmarke vorgesehen, welche als zusätzliches Steuerzahnelement in einer Lücke ausgebildet ist. So ein zusätzliches Steuerzahnelement kann bei der vorliegenden Erfindung so ausgebildet sein, dass es auch in eine relativ schmale Lücke hinein passt, so dass zwischen zwei Zahnelementen ein Steuerzahnelement ausgebildet ist und in diesem Bereich eine geänderte Ausgangssignalfrequenz (verkürzte Taktung) erzeugt wird. Dieser veränderte Signalrhythmus signalisiert eine Referenzstellung (Nulldurchgang) des Geberrades, auf deren Grundlage neben der Drehgeschwindigkeit auch die Absolutstellung des Geberrades ermittelt werden kann. Dies ist insbesondere bei Drehzahlsensoranordnungen für Nockenwellen hilfreich, da über die Absolutstellung der Nockenwelle auch die Drehstellung der Kurbelwelle ermittelt werden kann, die anzeigt, in welchem Taktzyklus sich die Kurbelwelle befindet. In Kombination mit einer Drehzahlsensoranordnung der Kurbelwelle kann so die genaue Kurbelwellenposition in einem 720°-Zyklus ermittelt werden.

Es gibt auch nicht erfindungsgemäße Ausführungen, bei denen die Referenzmarke als Referenzlücke mit einem vergrößerten Abstand zwischen zwei benachbarten Zahnelementen ausgebildet ist. Eine solche Referenzlücke verursacht eine Verringerung der Signalfrequenz bzw. eine Verringerung des Abstandes zwischen zwei Signalen (verlangsamter Signalrhythmus), die ebenfalls als Referenzsignal genutzt werden kann, um die Absolutstellung der Nockenwelle und damit auch einer Kurbelwelle anzuzeigen.

Es gibt Ausführungen, bei denen die Schaltflanken einen Winkel zwischen 20 und 40° zueinander bilden und insbesondere einen Winkel von 30°. Eine solche Ausbildung der Schaltflanken ermöglicht die Detektion einer klaren Signalspitze beim Übergang des Differential-Hall-Sensors (bzw. der Hall-Sensorelemente) von der Zahnlücke zur einen Schaltflanke des Zahnelements und weiter von der anderen Schaltflanke des Zahnelements zur Zahnlücke. Zwischen diesen beiden Hall-Signalspitzen gibt es dann im Bereich der Schaltkante (dort laufen die Schaltflanken zusammen) einen klar definierten Nulldurchgang des Hall-Signals, der wiederum zur Definition des Ausgangssignals herangezogen werden kann.

Dabei gibt es Ausführungen, bei denen die Schaltkanten einen äußeren Kopfkreis definieren und die Lücken einen inneren Fußkreis, wobei das Verhältnis zwischen Fußkreisdurchmesser und Kopfkreisdurchmesser zwischen 1 zu 1,2 und 1 zu 1,4 beträgt und insbesondere zwischen 1 zu 1,3 und 1 zu 1,35. Damit ergeben sich radiale Zahnhöhenverhältnisse, die ein zuverlässiges und toleranzstabiles Hall-Signal sicherstellen. Toleranzstabil heißt in diesem Zusammenhang, dass der Abstand der Hall-Sensorelemente zum Geberrad in vergleichsweise weit tolerierbaren Abständen einstellbar ist.

Es gibt Ausführungen, bei denen der Durchmesser des Kopfkreises zwischen 40 und 50 mm und insbesondere 45 mm beträgt. Ein Geberrad mit einem solchen Kopfkreisdurchmesser hat eine Baugröße, die insbesondere den Einsatz in einer Drehzahlsensoranordnung an einer Nockenwelle erlaubt.

Es gibt auch Ausführungen bei denen der Kopfkreisdurchmesser unter 40 mm liegt.

Dabei gibt es Ausführungen, bei denen die Zahnelemente in einem Winkelabstand von 24-36° insbesondere in einem Winkelabstand von 30° angeordnet sind. Damit sind zehn bis fünfzehn Zahnelemente auf dem Geberrad realisierbar und insbesondere zwölf Zahnelemente. Bei einem zusätzlichen Referenz- oder Steuerzahnelement erhöht sich die Gesamtanzahl auf elf bis sechzehn und insbesondere auf dreizehn Zahnelemente.

Verringert man den Winkelabstand auf 15°, können bis zu 24 Zahnelemente bei einem Durchmesser von ca. 45 mm angeordnet werden.

Eine radiale Höhe der Zahnelemente zwischen 8 und 15 mm erlaubt es ebenfalls, die Signalqualität toleranzstabil zu verbessern.

Bei Ausführungen, bei denen zwischen den Schaltflanken und dem Lückenboden ein Übergangsradius ausgebildet ist, der zwischen 2 und 3 mm und insbesondere bei 2,5 mm liegt, lassen sich die Geberräder in einem einfachen Sinterverfahren aus einem ferromagnetischen Werkstoff herstellen, bei dem die Endgestalt bearbeitungsarm in einem Urform-Verfahren herstellbar ist.

Bei der erfindungsgemäßen Ausführung, bei der die Sensoreinrichtung wenigstens drei Hall-Sensorelemente umfasst, die jeweils paarweise einen ersten und einen zweiten Differential-Hall-Sensor bilden, ist es möglich, je nach Drehrichtung des Geberrades unterschiedlich phasenverschobene HallSignale zu erhalten, die eine Drehrichtungsinformation liefern. Die Drehrichtungsinformation wird dadurch erzeugt, dass jeweils ein Paar der drei Hall-Sensorelemente in Drehrichtung gegeneinander versetzt zwei Differential-Hall-Sensoren bilden, deren Signal leicht phasenversetzt ist, wobei sich das Vorzeichen des Phasenversatzes bei einem Drehrichtungswechsel verändert. Auf diese Weise ist die Drehrichtung des Geberrades feststellbar. So eine Drehrichtungsinformation ist insbesondere bei der Verwendung in Verbindung mit Kurbelwellen hilfreich, bei denen beim Anhalten ein Drehrichtungswechsel stattfinden kann (insbesondere beim Durchgang durch einen unteren bzw. oberen Totpunkt), und das Detektieren dieses Drehrichtungswechsels bei der Bestimmung der Absolutstellung der Kurbelwelle (KW) erforderlich ist, um beispielsweise einen Start-Stopp-Zyklus des Motors sauber fahren zu können. Während eines Stopps bei einem Start/Stopp-Zyklus ist es für einen schnellen Wiederstart einer Verbrennungskraftmaschine (VKM) erforderlich, die Position der KW zu sensieren. Da eine VKM beim Stoppen auch in Motordrehrichtung rückwärts drehen kann (aber auch vor und zurück pendeln kann), ist eine Drehrichtungserkennung erforderlich. Das Ergebnis ist, dass das Motorsteuergerät zu jedem Zeitpunkt und auch bei Motorstillstand die Position der KW kennt. KW und NW sind und bleiben "synchronisiert". Diese Information dient der Zündung/Einspritzung in den nächstmöglichen Zylinder für einen schnellen, verzögerungsfreien und komfortablen Wiederstart

Eine Antriebswellenanordnung mit einer erfindungsgemäßen Drehzahlanordnung, bei der die Antriebswellenanordnung als Nockenwelle und/oder als Kurbelwelle ausgebildet ist, erlaubt die Verwendung von besonders schnellen Nockenwellen-Verstelleinheiten, die zur Steuerung moderner Motoren erforderlich sind. Durch die hohe Auflösung bei der Detektion der Nockenwellenstellung und -geschwindigkeit, ist eine besonders genaue und schnelle Ansteuerung der Nockenwellen-Verstelleinheit möglich.

Ein Verbrennungsmotor mit einer Antriebswellenanordnung nach Anspruch 12 sowie ein Kraftfahrzeug mit einem solchen Verbrennungsmotor sind besonders für moderne, hocheffiziente Antriebskonzepte nützlich.

Ausführungsbeispiele der Erfindung werden nun beispielhaft und unter Bezugnahme auf die beigefügte Zeichnung beschrieben. Darin zeigt:
- Fig. 1: in schematischer Darstellung ein Kraftfahrzeug mit einem Verbrennungsmotor und einer Antriebswellenanordnung, bei dem sowohl an der Kurbelwelle als auch an der Nockenwelle eine erfindungsgemäße Drehzahlsensoranordnung vorgesehen ist;
- Fig. 2: eine schematische Darstellung einer erfindungsgemäßen Drehzahlsensoranordnung;
- Fig. 3: eine schematische Darstellung des Zusammenhangs zwischen Sensor, Geberradgeometrie, Hall-Signal, und Ausgangssignal;
- Fig. 3A: den in Fig. 3 dargestellten Zusammenhang, bei dem eine Referenzmarke als vergrößerte Zahnlücke ausgebildet ist; und
- Fig. 3B: den in Fig. 3 und 3A dargestellten Zusammenhang, bei dem eine Referenzmarke als zusätzliches Steuerzahnelement ausgebildet ist.

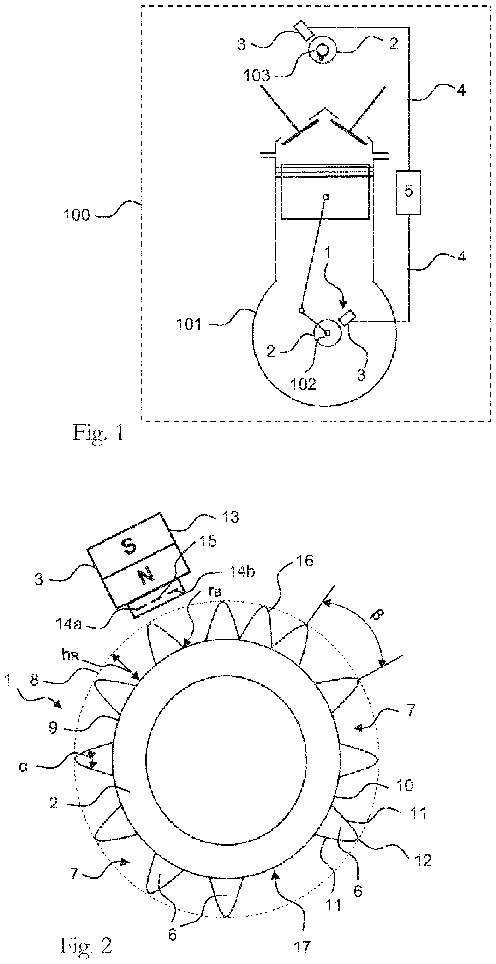

Fig. 1 zeigt schematisch ein Ausführungsbeispiel eines erfindungsgemäßen Kraftfahrzeugs 100 mit einem Verbrennungsmotor 101, der eine Antriebswellenanordnung mit einer Kurbelwelle 102 und einer Nockenwelle 103 umfasst. Sowohl an der Kurbelwelle 102 als auch an der Nockenwelle 103 ist jeweils eine Drehzahlsensoranordnung 1 angeordnet, die ein Geberrad 2 umfasst und einen Sensor 3, der als Differential-Hall-Sensor ausgebildet ist. Jede der Drehzahlsensoranordnungen 1 ist geeignet, sowohl die Stellung als auch die Drehgeschwindigkeit der Kurbelwelle 102 bzw. der Nockenwelle 103 zu erfassen und über eine Datenleitung 4 ein entsprechendes Ausgangssignal an ein Motorsteuergerät 5 abzugeben, das anhand der Signale unterschiedliche Motorfunktionen steuert, insbesondere die Verstellung einer Nockenwellen-Verstelleinheit.

Aufbau und Funktion der Drehzahlsensoranordnung 1 wird anhand der Fig. 2 beschrieben. Die Drehzahlsensoranordnung 1 umfasst das Geberrad 2 und den Sensor 3. Das Geberrad 2 ist als ringförmiger Zahnkranz ausgebildet, der aus einem ferromagnetischen Sinterwerkstoff hergestellt sein kann, zum Beispiel ein 4-Sint-D10 gemäß DIN 30910. Es können auch tiefgezogene Bleche, gestanzte Bleche, gefräste Werkstücke, etc. verwendet werden. Bei einer Anordnung eines Sensors 3 mit integriertem Magneten 13, muss das Geberradmaterial aber immer ferromagnetisch (magnetisch leitend, weichmagnetisch) sein. Die am Geberrad ausgebildeten Zahnelemente 6, zwischen denen Lücken 7 ausgebildet sind, bilden die Signalmarken, mit deren Hilfe der Sensor 3 entsprechende Signale erzeugt. Die Zahnelemente 6 erstrecken sich radial vom Geberrad 2 und definieren einen Kopfkreis 8, dessen Durchmesser das 1,2- bis 1,4-fache des Durchmessers eines Fußkreises 9 beträgt, der durch den tiefsten Punkt der Sohlenbereiche der Lücken 7 definiert wird.

Die Zahnelemente 6 werden durch Zahnflanken definiert, die Schaltflanken 11 bilden und die jeweils in einer Schaltkante 12 zusammenlaufen. Die Schaltflanken 11 schließen zueinander einen Winkel α zwischen 20 und 40° und insbesondere einen Winkel von 30° und gehen in den Sohlenbereich 10 mit einem Übergangsradius r_{B} über. Die Zahnelemente 6 sind in einem Winkelabstand von 24-36°, insbesondere in einem Winkelabstand von 30° angeordnet (Winkel β).

Bei einem typischen Ausführungsbeispiel beträgt der Durchmesser des Kopfkreises 8 zwischen 40 und 50 mm und die radiale Höhe h_{R} der Zahnelemente 6 zwischen 8 und 15 mm und der Übergangsradius r_{B} zwischen 2 und 3 mm, insbesondere 2,5 mm. Bei so einer Geometrie sind zwischen 10 und 15 Zahnelemente 6 über dem Umfang des Geberrades 2 verteilt, die in Verbindung mit dem Sensor 3 ein hoch aufgelöstes Impulssignal generieren, das sowohl die Drehgeschwindigkeit, die absolute Drehstellung und gegebenenfalls auch die Drehrichtung des Geberrades anzeigt.

Der dargestellte Sensor 3 umfasst einen Permanentmagneten 13 mit Nord- und Südpol, auf dessen Stirnseite wenigstens zwei Hall-Sensorelemente 14a, 14b angeordnet sind, an denen eine Versorgungsspannung anliegt und die vom Magnetfeld des Permanentmagneten 13 in Richtung Geberrad durchsetzt werden. Je nachdem, ob sich das Hall-Sensorelement 14a, 14b gegenüber einer Lücke 7 oder einer Schaltkante 12 bzw. einer Schaltflanke 11 des Zahnelementes 6 befindet, wird eine Hall-Spannung induziert, welche der relativen Stellung des Zahnelementes 6 bzw. der Lücke zum Hall-Sensor 14a, 14b entspricht. Eine Differenzbildung der Signale aus beiden Sensoren 14a, 14b erlaubt eine Reduzierung magnetischer Störsignale und ein verbessertes Signal-Rauschverhältnis.

Anstelle des ferromagnetischen Geberrades 3 mit Zahnelementen 6 und Lücken 7 wäre es bei einer nicht erfindungsgemäßen Variante auch möglich, sogenannte Multipolräder einzusetzen, bei denen auf einem Träger ein magnetisierbarer Kunststoff aufgebracht ist und wechselweise magnetisiert ist. Diese wechselweise angeordneten magnetischen Nord- und Südpole erfüllen dann die Funktion der Zähne bzw. der Lücken des Impulsrades. Beim Einsatz eines solches Multipol-Geberrades ist kein Permanentmagnet 13 im Sensor 3 erforderlich.

In der erfindungsgemäßen Ausführung ist ein dritter Hall-Sensor 15 angeordnet, so dass der Sensor 3 zwei Differential-Hall-Sensoranordnungen trägt, die jeweils aus den Hall-Sensorelementen 14a und 15 sowie aus den Hall-Sensorelementen 15 und 14b gebildet werden. Eine solche Anordnung ergibt zwei Differenzsensorsignale, die jeweils phasenversetzt abgegeben werden und so die Drehrichtung des Geberrades detektieren können. Das Vorzeichen des Phasenversatzes wechselt je nach Drehrichtung. Dieser Phasenversatz kann bereits sensorintern verarbeitet werden, so dass der Sensor 3 die Information zur Drehrichtung als digital codiertes Signal ausgibt (i.d.R. pulsweitenmoduliert).

Zur Detektion der absoluten Drehstellung ist ein Steuerzahnelement 16 vorgesehen, das in der Lücke zwischen zwei Zahnelementen 6 angeordnet ist. Alternativ kann abweichend von der beanspruchten Erfindung als Referenzmarke auch eine vergrößerte Lücke bzw. ein weggelassenes Steuerzahnelement 6 zwischen zwei benachbarten Steuerzahnelementen 16 vorgesehen werden, eine solche Lücke ist mit dem Bezugszeichen 17 in der Fig. 2 dargestellt.

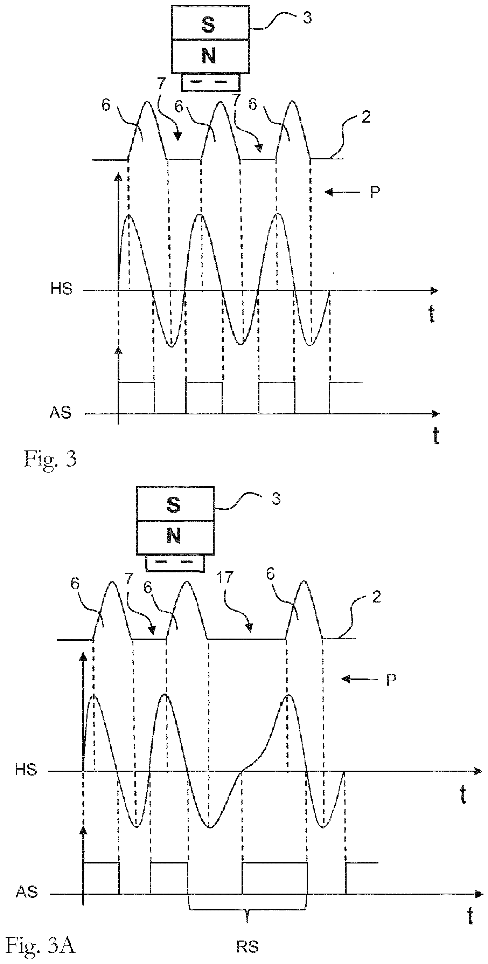

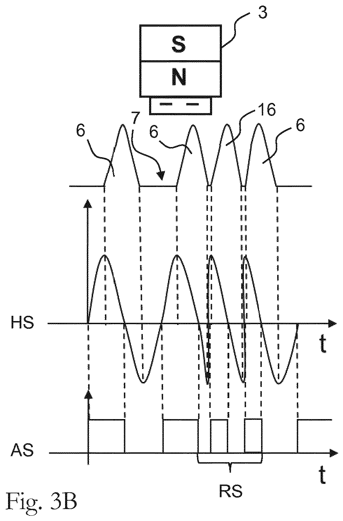

Fig. 3 zeigt den Zusammenhang zwischen relativer Stellung des Geberradprofils zum Sensor 3, dem abgegebenen Hall-Signal HS und dem schließlich zur Steuerung ermittelten Ausgangssignal AS. Bewegt sich das Geberradprofil (abgewickelt dargestellt) in Pfeilrichtung P relativ zum Sensor 3, wird durch die Hall-Sensorelemente 14 ein Hall-Spannungsverlauf HS erzeugt. Zur Bestimmung des Ausgangssignales AS dient jeweils der Nulldurchgang der Spannungsflanke, der einmal im Bereich der Schaltkante 12 stattfindet und in der Mitte der Lücke zwischen zwei benachbarten Zahnelementen 6. Die so erzeugte digitale Rechtecksignalfolge AS dient zur Erfassung der Drehgeschwindigkeit bzw. der Drehstellung (Position) des Geberrades und damit zur Erfassung der Drehgeschwindigkeit bzw. der Drehstellung (Position) eines zugeordneten Bauteiles, beispielsweise einer Nockenwelle oder einer Kurbelwelle.

Die Fig. 3A und 3B zeigen eine Signalfolge, bei der entweder eine Referenzlücke 17 oder zusätzliches Steuerzahnelement 16 ein verändertes Referenzsignal (RS) erzeugt, welches die absolute Stellung des Geberrades zum Sensor anzeigen kann.

### Bezugszeichenliste

- 100: Kraftfahrzeug
- 101: Verbrennungsmotor
- 102: Kurbelwelle
- 103: Nockenwelle

- 1: Drehzahlsensoranordnung
- 2: Geberrad
- 3: Sensor (Differential-Hall-Sensor)
- 4: Datenleitung
- 5: Motorsteuergerät
- 6: Zahnelement
- 7: Lücke
- 8: Kopfkreis
- 9: Fußkreis
- 10: Sohlenbereich
- 11: Schaltflanke (Zahnflanke)
- 12: Schaltkante
- 13: Permanentmagnet
- 14a, b: Hall-Sensorelement
- 15: optionales Hall-Sensorelement
- 16: Steuerzahnelement
- 17: Referenzlücke
- α: Winkel (Schaltflankenwinkel)
- r_{B}: Übergangsradius
- β: Abstandswinkel Zahnelemente
- h_{R}: radiale Höhe
- HS: Hallsignal
- AS: Ausgangssignal
- RS: Referenzsignal

## Patentansprüche

1. Drehzahlsensoranordnung (1), umfassend:
ein Geberrad (2), das zueinander beabstandete Signalmarken aufweist;
einen Sensor (3), mit wenigstens zwei, einen Differential-Hall-Sensor bildenden
Hallsensorelementen (14a, 14b), die so ausgebildet sind, dass sie jeweils in Abhängigkeit der Position und/oder
Bewegung der Signalmarken ein Hallsignal ausgeben; und
eine Signalschaltung, die so ausgebildet ist, dass sie basierend auf dem Hallsignal (HS) ein Ausgangssignal (AS)
ermittelt und basierend auf dem Ausgangssignal (AS) eine Drehstellung des Geberrades (2) bestimmt, wobei
die Signalmarken radial verlaufende Zahnelemente (6) mit zwei Zahnflanken (11) aufweisen und die Zahnflanken (11) in einer Schaltkante (12) zusammenlaufen,
die Signalmarken Lücken (7) umfassen, die in Umfangsrichtung gleiche Abstände zwischen den Zahnelementen (6) bilden,
eine Referenzmarke vorgesehen ist, welche als zusätzliches Steuerzahnelement (16) in einer Lücke (7) ausgebildet ist,
wobei die Sensoreinrichtung (3) wenigstens drei Hall-Sensorelemente (14a, 14b, 15) umfasst, die einen ersten und einen zweiten Differential-Hall-Sensor bilden und so ausgebildet sind, dass diese je nach Drehrichtung des Geberrades (2) unterschiedlich phasenverschobene Hallsignale (HS) liefern, wobei sich das Vorzeichen des Phasenversatzes bei einem Drehrichtungswechsel verändert und damit der
Drehrichtungswechsel detektierbar ist, und wobei die Drehzahlsensoranordnung derart ausgebildet ist, dass unter Berücksichtigung einer durch die Referenzmarke angezeigten Referenzstellung und der Drehrichtungsinformation die Absolutstellung des Geberrades (2) bestimmt wird.

2. Drehzahlsensoranordnung (1) nach Anspruch 1, wobei die Zahnflanken (11) einen Winkel (α) zwischen 20 und 40° zueinander bilden, und insbesondere einen Winkel (α) von 30°.

3. Drehzahlsensoranordnung (1) einem der Ansprüche 1 oder 2, wobei die Schaltkanten (12) einen äußeren Kopfkreis (α) definieren und die Lücken (7) einen inneren Fußkreis (9), wobei das Verhältnis zwischen Fußkreisdurchmesser und Kopfkreisdurchmesser zwischen 1 zu 1,2 und 1 zu 1,4 beträgt, insbesondere zwischen 1 zu 1,3 und 1 zu 1,35.

4. Drehzahlsensoranordnung (1) nach Anspruch 3, wobei der Durchmesser des Kopfkreises (8) zwischen 40 und 50 mm, insbesondere 45 mm beträgt.

5. Drehzahlsensoranordnung (1) nach einem der Ansprüche 1 bis 4, wobei die Zahnelemente (6) in einem Winkelabstand (β) von 24 bis 36°, insbesondere in einem Winkelabstand (β) von 30° angeordnet sind.

6. Drehzahlsensoranordnung (1) nach einem der Ansprüche 1 bis 5, wobei die radiale Höhe (h_{R}) der Zahnelemente (6) zwischen 8 und 15 mm beträgt.

7. Drehzahlanordnung (1) nach einem der Ansprüche 1 bis 6, wobei zwischen den Zahnflanken (11) und einem Lückenboden ein Übergangsradius (r_{B}) ausgebildet ist der zwischen 2 und 3 mm, insbesondere 2,5 mm beträgt.

8. Antriebswellenanordnung mit einer Drehzahlsensoranordnung (1) nach einem der Ansprüche 1 bis 7, wobei die Antriebswellenanordnung als Nockenwelle (103) oder als Kurbelwelle (102) ausgebildet ist.

9. Verbrennungsmotor (101) mit einer Antriebswellenanordnung nach Anspruch 8.

10. Kraftfahrzeug (100) mit einem Verbrennungsmotor (101) nach Anspruch 9.

## Claims

1. Rotational speed sensor arrangement (1) comprising:
an encoder wheel (2) having signal marks which are spaced apart from one another;
a sensor (3) having at least two Hall sensor elements (14a, 14b) which form a differential Hall sensor and are designed in such a manner that they each output a Hall signal on the basis of the position and/or movement of the signal marks; and
a signal circuit which is designed to determine an output signal (AS) on the basis of the Hall signal (HS) and to determine a rotational position of the encoder wheel (2) on the basis of the output signal (AS), wherein
the signal marks have radially running tooth elements (6) with two tooth edges (11) and the tooth edges (11) converge on a switching edge (12),
the signal marks comprise gaps (7) which form identical spacings between the tooth elements (6) in the circumferential direction,
a reference mark is provided and is in the form of an additional control tooth element (16) in a gap (7),
wherein the sensor device (3) comprises at least three Hall sensor elements (14a, 14b, 15) which form a first and a second differential Hall sensor and are designed to provide differently phase-shifted Hall signals (HS) depending on the direction of rotation of the encoder wheel (2), wherein the sign of the phase offset changes in the event of a change in the direction of rotation and the change in the direction of rotation can therefore be detected, and wherein the rotational speed sensor arrangement is designed to determine the absolute position of the encoder wheel (2) taking into account a reference position indicated by the reference mark and the information relating to the direction of rotation.

2. Rotational speed sensor arrangement (1) according to Claim 1, wherein the tooth edges (11) form an angle (α) of between 20 and 40° with respect to one another, in particular an angle (α) of 30°.

3. Rotational speed sensor arrangement (1) according to either of Claims 1 and 2, wherein the switching edges (12) define an outer tip circle (8) and the gaps (7) define an inner root circle (9), wherein the ratio between the root circle diameter and the tip circle diameter is between 1 to 1.2 and 1 to 1.4, in particular between 1 to 1.3 and 1 to 1.35.

4. Rotational speed sensor arrangement (1) according to Claim 3, wherein the diameter of the tip circle (8) is between 40 and 50 mm, in particular is 45 mm.

5. Rotational speed sensor arrangement (1) according to one of Claims 1 to 4, wherein the tooth elements (6) are arranged at an angular spacing (β) of 24 to 36°, in particular at an angular spacing (β) of 30°.

6. Rotational speed sensor arrangement (1) according to one of Claims 1 to 5, wherein the radial height (h_{R}) of the tooth elements (6) is between 8 and 15 mm.

7. Rotational speed sensor arrangement (1) according to one of Claims 1 to 6, wherein a transition radius (r_{B}), which is between 2 and 3 mm, in particular is 2.5 mm, is formed between the tooth edges (11) and a gap bottom.

8. Drive shaft arrangement having a rotational speed sensor arrangement (1) according to one of Claims 1 7, wherein the drive shaft arrangement is in the form of a camshaft (103) or a crankshaft (102).

9. Internal combustion engine (101) having a drive shaft arrangement according to Claim 8.

10. Motor vehicle (100) having an internal combustion engine (101) according to Claim 9.

## Revendications

1. Ensemble formant capteur de vitesse de rotation (1) comprenant :
une roue de détection (2) qui comporte des marques de signal espacées les unes des autres ;
un capteur (3) pourvu d'au moins deux éléments de capteur à effet Hall (14a, 14b) qui forment un capteur à effet Hall différentiel et qui sont conçus de façon délivrer chacun un signal Hall en fonction de la position et/ou du mouvement des marques de signal ; et
un circuit de signal qui est conçu pour déterminer un signal de sortie (AS) sur la base du signal Hall (HS) et déterminer une position en rotation de la roue de détection (2) sur la base du signal de sortie (AS),
les marques de signal comportant des éléments dentés (6) qui s'étendent radialement et qui sont pourvus de deux flancs de dent (11) et les flancs de dent (11) convergeant en un bord de commutation (12),
les marques de signal comportant des interstices (7) qui forment des espacements égaux entre les éléments dentés (6) dans la direction circonférentielle,
une marque de référence étant prévue qui est conçue comme un élément de dent de commande supplémentaire (16) dans un interstice (7),
le dispositif capteur (3) comprenant au moins trois éléments capteurs à effet Hall (14a, 14b, 15) qui forment un premier et un deuxième capteur à effet Hall différentiel et qui sont conçus pour délivrer des signaux Hall (HS) qui présentent des déphasages différents selon le sens de rotation de la roue de détection (2), le signe du déphasage changeant en cas de changement de sens de rotation et le changement de sens de rotation pouvant ainsi être détecté, et l'ensemble formant capteur de vitesse de rotation étant conçu pour déterminer la position absolue de la roue de détection (2) en tenant compte d'une position de référence indiquée par la marque de référence et de l'information de sens de rotation.

2. Ensemble formant capteur de vitesse de rotation (1) selon la revendication 1, les flancs de dent (11) formant entre eux un angle (α) compris entre 20 et 40°, et notamment un angle (α) de 30°.

3. Ensemble formant capteur de vitesse de rotation (1) selon l'une des revendications 1 ou 2, les bords de commutation (12) définissant un cercle de pointe extérieur (8) et les interstices (7) définissant un cercle de pied intérieur (9), le rapport entre le diamètre du cercle de pied et le diamètre du cercle de pointe étant compris entre 1:1,2 et 1:1,4, en particulier entre 1:1,3 et 1:1,35.

4. Ensemble formant capteur de vitesse de rotation (1) selon la revendication 3, le diamètre du cercle de pointe (8) étant compris entre 40 et 50 mm, en particulier étant de 45 mm.

5. Ensemble formant capteur de vitesse de rotation (1) selon l'une des revendications 1 à 4, les éléments dentés (6) étant disposés à une distance angulaire (β) de 24 à 36°, en particulier à une distance angulaire (β) de 30°.

6. Ensemble formant capteur de vitesse de rotation (1) selon l'une des revendications 1 à 5, la hauteur radiale (h_{R}) des éléments dentés (6) étant comprise entre 8 et 15 mm.

7. Ensemble formant capteur de vitesse de rotation (1) selon l'une des revendications 1 à 6, un rayon de transition (r_{B}) compris entre 2 et 3 mm, en particulier de 2,5 mm, étant formé entre les flancs de dent (11) et un fond d'interstice.

8. Ensemble formant arbre d'entraînement muni d'un ensemble formant capteur de vitesse de rotation (1) selon l'une des revendications 1 à 7, l'ensemble formant arbre d'entraînement étant conçu comme un arbre à cames (103) ou comme un vilebrequin (102).

9. Moteur à combustion interne (101) muni d'un ensemble formant arbre d'entraînement selon la revendication 8.

10. Véhicule automobile (100) comprenant un moteur à combustion interne (101) selon la revendication 9.
